# EUROPEAN PATENT APPLICATION

(11) **EP 4 653 735 A1**
(43) Date of publication of application: **26.11.2025**
(21) Application number: 25164945.5
(22) Date of filing: 20.03.2025
(51) Int. Cl.: F16K 31/60, F16K 35/02

(54) **VALVE HOUSING AND WATER OUTLET DEVICE**

(30) Priority: 23.05.2024 CN 202421142440 U
(71) Applicant: Fujian Domoo Sanitary Ware Technology Co., Ltd, QuanZhou, Fujian 362304 (CN)
(72) Inventor: LIN, Xiaofa, QuanZhou 362304 (CN); LIN, Xiaoshan, QuanZhou 362304 (CN); YU, Kaishi, QuanZhou 362304 (CN); LIU, Huaran, QuanZhou 362304 (CN); PAN, Longjiang, QuanZhou 362304 (CN); JI, Hejun, QuanZhou 362304 (CN); DENG, Xiaoqing, QuanZhou 362304 (CN); LIU, Qiqiao, QuanZhou 362304 (CN)
(74) Representative: Argyma

(57) **Abstract**

A valve housing and a water outlet device, the valve housing accommodating a valve core (1) and including a shell (3), a position-limiting member (4) and an operation member (9). The operation member can be fixed to a valve stem of the valve core and at least partially located outside the shell, and can be operated to rotate around the axis of the valve stem so as to control the valve core. The operation member is provided with an abutting portion extending in a direction parallel with the axis of the through hole. When the operation member rotates, the first position-limiting portion and the second position-limiting portion can abut against the abutting portion to restrict a rotation stroke of the operation member.

## Description

### TECHNICAL FIELD

The disclosure relates to the technical field of sanitary products, and in particular to a valve housing and a water outlet device.

### Description of Related Art

Before the use of a valve core, it is required to install the valve core inside a seat provided with a water path which generally includes a hot water path. In order to prevent the user from being scalded and make the appearance simple, a typical method is to provide a valve housing outside the seat, and then the valve stem of the valve core is rotated by means of a knob on the valve housing so as to control the valve core. In the existing valves, the position-limiting portion for restricting the rotation stroke of the knob is generally arranged on the valve core, and the push rod on the knob needs to extend into the valve core before it can abut against the position-limiting portion such that the position-limiting portion can restrict the rotation stroke of the knob. However, since there are a variety of valve cores, the distance between the valve cores and the knob varies, so it is hard for a push rod with a fixed length to extend into the valve core. Therefore, it is required to use different valve housings for different valve cores, which is not convenient.

### SUMMARY

An objective of the disclosure is to overcome the defect or problem in the BACKGROUND to provide a valve housing and a water outlet device.

In order to achieve the above objective, the disclosure adopts the following technical solutions:
A first technical solution relates to a valve housing, including:
a shell for accommodating a valve core;
a position-limiting member, provided with a through hole, and suitable to be fixedly connected to the shell and allow the through hole to communicate an inside of the shell with an outside of the shell, the position-limiting member being provided with a first position-limiting portion and a second position-limiting portion located on a wall of the through hole, the first position-limiting portion and the second position-limiting portion being arranged at intervals around an axis of the through hole and protruding toward an inside of the through hole, and when the valve core is installed inside the shell, an axis of a valve stem being parallel with the axis of the through hole; and
an operation member, suitable to be fixedly connected to the valve stem of the valve core and at least partially located outside the shell, and suitable to be operated to rotate around the axis of the valve stem so as to control the valve core, the operation member being provided with an abutting portion extending in a direction parallel with the axis of the through hole, the abutting portion deviating from the axis of the through hole and could extend into the through hole, and when the operation member rotates, one of the first position-limiting portion and the second position-limiting portion being suitable to abut against the abutting portion to restrict a rotation stroke of the operation member.

In a second technical solution based on the first technical solution, the operation member is provided with a pressing portion, and the position-limiting member is provided with a third position-limiting portion. The third position-limiting portion is located on the wall of the through hole and protrudes toward the inside of the through hole, and the second position-limiting portion is located between the first position-limiting portion and the third position-limiting portion. The pressing portion could be pressed to reduce a distance between the abutting portion and the axis of the through hole, such that during the rotation of the operation member, the abutting portion could go over the second position-limiting portion to continue rotating until abutting against the third position-limiting portion.

In a third technical solution based on the second technical solution, the operation member includes a rotating member, a pressing member, an abutting member and an elastic member. The rotating member is suitable to be fixedly connected to the valve stem of the valve core and at least partially located outside the shell, and suitable to be operated to rotate around the axis of the valve stem so as to control the valve core. The rotating member is provided with a first extending portion and a second extending portion extending along an axis direction of the through hole. The first extending portion is farther away from the axis of the through hole than the second extending portion, and an accommodating space is formed between the first extending portion and the second extending portion. The first extending portion is provided with a via hole located outside the shell. The pressing member is installed in the via hole and forms the pressing portion. The elastic member is located in the accommodating space with one end abutting against the pressing member and another end abutting against the second extending portion. The abutting member forms the abutting portion, is at least partially located in the accommodating space and runs through the pressing member along the axis direction of the through hole, and is suitable to abut against the first extending portion under the action of elastic force of the elastic member so as to prevent the pressing member from leaving the via hole.

In a fourth technical solution based on the third technical solution, the position-limiting member is provided with a stopping portion, which is located on the wall of the through hole and protrudes toward the inside of the through hole and is suitable to abut against the abutting member along the axis direction of the through hole so as to prevent the abutting member from moving toward the inside of the shell.

In a fifth technical solution based on the third technical solution, the position-limiting member is provided with a guiding protrusion protruding toward the outside of the shell along the axis direction of the through hole, and when the rotating member is fixedly connected to the valve stem of the valve core, the first extending portion is sleeved on the guiding protrusion, and the guiding protrusion is suitable to abut against the first extending portion to prevent the operation member from deviation in a radial direction of the through hole.

In a sixth technical solution based on the third technical solution, the first extending portion is suitable to abut against the position-limiting member to prevent the position-limiting member from leaving the shell.

In a seventh technical solution based on the first technical solution, the shell is provided with a mounting hole, and the position-limiting member is matched with the mounting hole in shape and is suitable to be installed into the mounting hole from the outside of the shell and is in anti-rotation connection with the shell. A wall of the mounting hole is provided with a support portion protruding to the inside of the mounting hole. The support portion is suitable to support the position-limiting member to prevent the position-limiting member from moving toward the inside of the shell.

In an eighth technical solution based on the seventh technical solution, either a bump or an embedding groove extending along a radial direction of the mounting hole is provide on the wall of the mounting hole, while the other is correspondingly provided on the position-limiting member. When the position-limiting member is installed in the mounting hole, the bump is correspondingly embedded into the embedding groove.

In a ninth technical solution based on the first technical solution, when the valve core is installed inside the shell, the axis of the valve stem and the axis of the through hole are located in a same straight line.

A tenth technical scheme relates to a water outlet device, including a seat, the valve core and the valve housing according to any one of the technical solutions 1 to 9. The valve core is fixedly connected to the seat. The seat is fixedly connected to the shell and located inside the shell. The axis of the valve stem of the valve core is parallel with the axis of the through hole. The operation member is fixedly connected to the valve stem of the valve core.

As can be seen from the above description of the disclosure, compared with the prior art, the disclosure has the following beneficial effects:

In the first technical solution, the shell is suitable to accommodate the valve core and keep the axis of the valve stem of the valve core parallel with the axis of the through hole, and the position-limiting member is provided with the through hole and is suitable to be fixedly connected to the shell and allow the through hole to communicate the inside of the shell with the outside of the shell. Therefore, the operation member can be fixedly connected to the valve stem of the valve core located inside the shell and at least partially located outside the shell, and the valve core can be controlled simply by operating the operation member. The position-limiting member is provided with the first position-limiting portion and the second position-limiting portion located on the wall of the through hole. The first position-limiting portion and the second position-limiting portion are arranged at intervals around the axis of the through hole and protrude toward the inside of the through hole. The operation member is provided with the abutting portion extending in the direction parallel with the axis of the through hole. The abutting portion deviates from the axis of the through hole and is suitable to extend into the through hole. Therefore, when the operation member rotates, one of the first position-limiting portion and the second position-limiting portion can abut against the abutting portion to restrict the rotation stroke of the operation member. Compared with the prior art, since the position of the position-limiting member in this technical solution is fixed, even if the shell is provided with different types of valve cores inside, the positions of the first position-limiting portion and the second position-limiting portion will not change, and the abutting portion of the operation member can always abut against one of the first position-limiting portion and the second position-limiting portion, so that the valve housing is compatible with different types of valve cores and has good universality.

In the second technical solution, the operation member is provided with the pressing portion, and the position-limiting member is further provided with the third position-limiting portion. The third position-limiting portion is also located on the wall of the through hole and protrudes toward the inside of the through hole, and the second position-limiting portion is located between the first position-limiting portion and the third position-limiting portion. The pressing portion could be pressed to reduce the distance between the abutting portion and the axis of the through hole, such that during the rotation of the operation member, the abutting portion can go over the second position-limiting portion to continue rotating until abutting against the third position-limiting portion. Therefore, when the operation member rotates such that the abutting portion abuts against the second position-limiting portion, it is required to press the pressing portion before the operation member can continue rotating, which functions to remind the user.

In the third technical solution, the operation member includes the rotating member, the pressing member, the abutting member and the elastic member. The rotating member is provided with the first extending portion and the second extending portion extending along the axis direction of the through hole. The first extending portion is farther away from the axis of the through hole than the second extending portion, and the accommodating space is formed between the first extending portion and the second extending portion. The first extending portion is further provided with the via hole located outside the shell. The pressing member is installed in the via hole and forms the pressing portion. The elastic member is located in the accommodating space with one end abutting against the pressing member and the other end abutting against the second extending portion. The abutting member forms the abutting portion, is at least partially located in the accommodating space and runs through the pressing member along the axis direction of the through hole, and is suitable to abut against the first extending portion under the action of elastic force of the elastic member so as to prevent the pressing member from leaving the via hole. Therefore, when the pressing portion is pressed, the elastic member can be compressed, and the abutting portion can be driven, so that the distance between the abutting portion and the axis of the through hole can be reduced.

In the fourth technical solution, the position-limiting member is further provided with the stopping portion, which is located on the wall of the through hole and protrudes toward the inside of the through hole and is suitable to abut against the abutting member along the axis direction of the through hole so as to prevent the abutting member from moving toward the inside of the shell, which prevents the abutting member from being disconnected from the pressing member and falling into the shell.

In the fifth technical solution, the position-limiting member is further provided with the guiding protrusion protruding toward the outside of the shell along the axis direction of the through hole, and when the rotating member is fixedly connected to the valve stem of the valve core, the first extending portion is sleeved on the guiding protrusion, and the guiding protrusion is suitable to abut against the first extending portion to prevent the operation member from deviation in the radial direction of the through hole, which is beneficial to the stable rotation of the rotating member.

In the sixth technical solution, the first extending portion is further suitable to abut against the position-limiting member so as to prevent the position-limiting member from leaving the shell.

In the seventh technical solution, the shell is provided with the mounting hole, and the position-limiting member is matched with the mounting hole in shape and is suitable to be installed into the mounting hole from the outside of the shell and is in anti-rotation connection with the shell. In this way, when the position-limiting member is fixedly connected to the shell, the through hole can communicate the inside of the through hole with the outside of the through hole. Installing the position-limiting member from the outside of the shell is convenient for mounting and replacement. The wall of the mounting hole is further provided with the support portion protruding to the inside of the mounting hole. The support portion is suitable to support the position-limiting member so as to prevent the position-limiting member from moving toward the inside of the shell.

In the eighth technical solution, either the bumps or the embedding grooves extending along the radial direction of the mounting hole are provided on the wall of the mounting hole, while the other is correspondingly provided on the position-limiting member. When the position-limiting member is installed in the mounting hole, the bumps are correspondingly embedded into the embedding grooves, which prevents the position-limiting member from rotating relative to the shell.

In the ninth technical solution, when the valve core is installed inside the shell, the axis of the valve stem and the axis of the through hole are located in the same straight line, so that when the operation member is fixedly connected to the valve stem, the abutting portion on the operation member can abut against one of the first position-limiting portion and the second position-limiting portion.

In the tenth technical solution, the water outlet device by adopting the above technical schemes thus has the corresponding technical effects.

### BRIEF DESCRIPTION OF THE DRAWINGS

In order to more clearly illustrate the technical solutions of the embodiments of the present disclosure, the following briefly introduces the drawings that need to be used in the description of the embodiments. Clearly, the drawings in the following description are some embodiments of the present disclosure. Those of ordinary skill in the art can also obtain other drawings based on these drawings on the premise of not making creative efforts.
FIG. 1 is a three-dimensional view of a water outlet device in the embodiment;
FIG. 2 is an exploded view of the water outlet device in the embodiment;
FIG. 3 is a three-dimensional view of a position-limiting member in the embodiment;
FIG. 4 is a side view of the water outlet device in the embodiment;
FIG. 5 is a schematic structural view of an operation member in the embodiment;
FIG. 6 is an exploded view of the water outlet device when a valve core is replaced in the embodiment;
FIG. 7 is a schematic structural view of the operation member when the valve core is replaced in the embodiment;
FIG. 8 is a sectional view of a seat of the water outlet device in the embodiment; and
FIG. 9 is a schematic structural view of the water outlet device in the embodiment.

### Description of main reference signs:

valve core 1, seat 2, shell 3, position-limiting member 4, through hole 5, first position-limiting portion 6, second position-limiting portion 7, valve stem 8, operation member 9, abutting portion 10, pressing portion 11, third position-limiting portion 12, rotating member 13, pressing member 14, abutting member 15, elastic member 16, first extending portion 17, second extending portion 18, accommodating space 19, via hole 20, stopping portion 21, guiding protrusion 22, mounting hole 23, support portion 24, embedding groove 25, bump 26, upper shell 27, lower shell 28, axis 29 of the through hole

### DETAILED DESCRIPTION

The following will clearly and completely describe the technical solutions in the embodiments of the present disclosure with reference to the drawings in the embodiments of the present disclosure. Clearly, the described embodiments are preferred embodiments of the disclosure and should not be seen as excluding other embodiments. Based on the embodiments of the present disclosure, all other embodiments obtained by persons of ordinary skill in the art without creative efforts fall within the protection scope of the present disclosure.

In the claims, specification and drawings of the present disclosure, unless otherwise clearly defined, the terms "first", "second" or "third" are used to distinguish different objects, not for describing a specific order.

In the claims, specification and drawings of the present disclosure, unless otherwise clearly defined, orientation words such as the terms "center", "transverse", "longitudinal", "horizontal", "vertical", "top" , "bottom", "inner", "outer", "up", "down", "front", "back", "left", "right", "clockwise", "counterclockwise" and indicating other directions or positional relationship are used to describe the orientation and positional relationship shown in the drawings, and are only for the convenience of describing the present disclosure and simplifying the description, rather than indicating or implying that the referred device or element must have a specific orientation or be constructed and operated in a specific orientation, so it should not be construed as limiting the specific protection scope of the present disclosure.

Unless otherwise clearly defined in the claims, specification, and the above-mentioned drawings of the disclosure, if the term "fixedly connected" or "fixed connection" is used, it should be understood in a broad sense, that is, any connection method without displacement relationship and relative rotation relationship between the two, that is, including non-removable fixed connection, removably fixed connection, connected as a whole, and fixed connection through other devices or components.

In the claims, specification and drawings of the present disclosure, if the terms "comprising", "having" and their variants are used, it is intended to mean "including but not limited to".

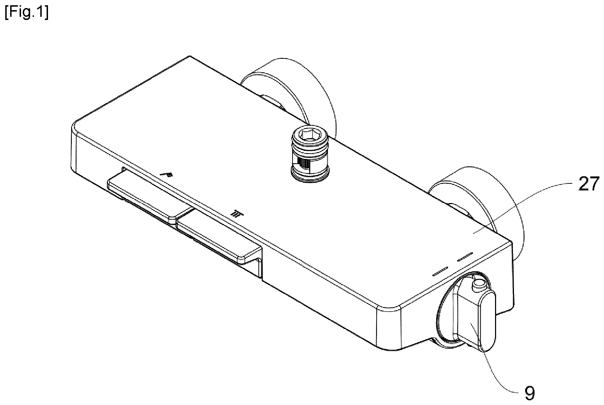

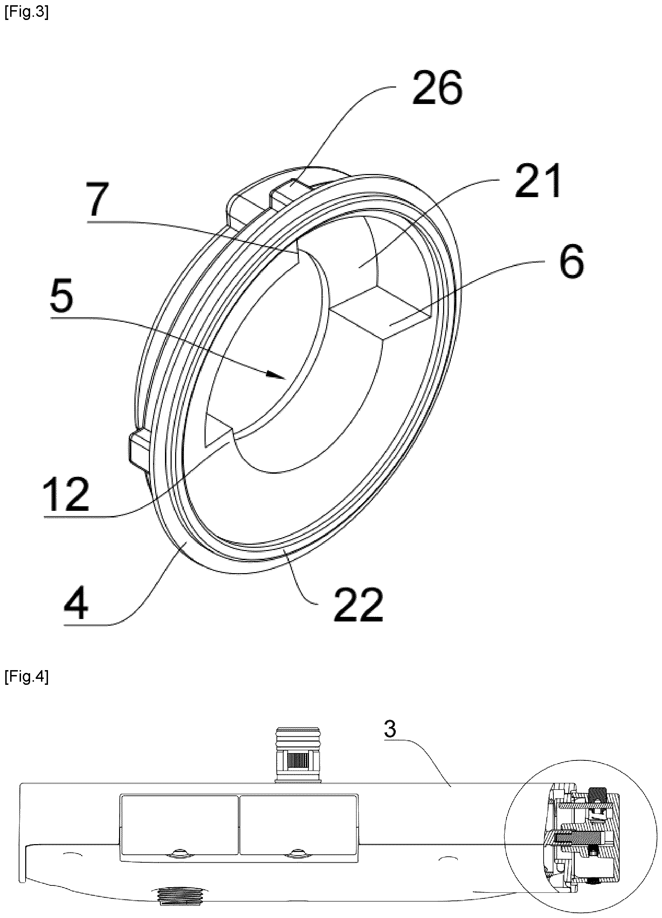

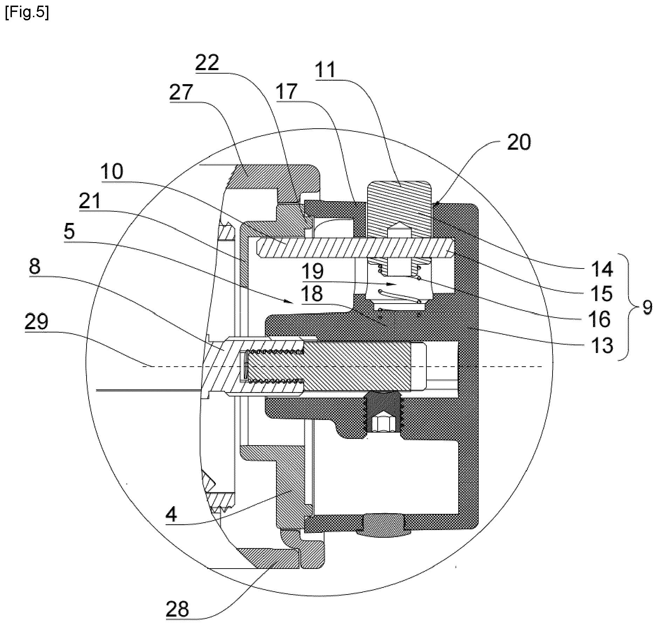

As shown in FIG. 1 to FIG. 5, the embodiment provides a water outlet device, including a seat 2, a valve core 1 and a valve housing. The valve housing includes a shell 3, a position-limiting member 4 and an operation member 9. The valve core 1 is fixedly connected to the seat 2and the seat 2 is fixedly connected to and located inside the shell 3.

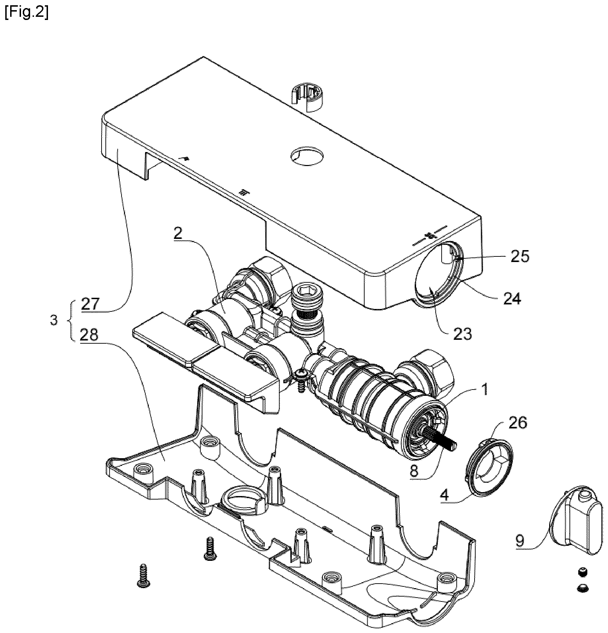

As shown in FIG. 2, the shell 3 includes an upper shell 27 and a lower shell 28. The upper shell 27 and the lower shell 28 are fixed to each other and can be detached from each other, so that the valve seat can be installed into the shell 3. The shell 3 is provided with a mounting hole 23 located in the upper shell 27. A wall of the mounting hole 23 is provided with a support portion 24 and embedding grooves 25, the support portion 24 is protruding to the inside of the mounting hole 23, and the embedding grooves 25 are extending along a radial direction of the mounting hole 23. In this embodiment, the support portion 24 is substantially ring-shaped, and the embedding grooves 25 are formed by notches in the support portion 24.

As shown in FIG. 2, FIG. 3 and FIG. 5, the position-limiting member 4 is in a shape matched with the mounting hole 23, and both the position-limiting member and the mounting hole are substantially circular. The position-limiting member 4 is provided with a through hole 5 and suitable to be fixedly connected to the shell 3, and the through hole 5 is allowed to communicate an inside of the shell 3 with an outside of the shell 3. When the valve core 1 is installed inside the shell 3, an axis of a valve stem 8 is parallel with an axis 29 of the through hole 5. In this embodiment, the axis of the valve stem 8 and the axis 29 of the through hole 5 are located in a same straight line. The position-limiting member 4 is further provided with a first position-limiting portion 6, a second position-limiting portion 7 and a third position-limiting portion 12 located on a wall of the through hole 5. The first position-limiting portion 6, the second position-limiting portion 7 and the third position-limiting portion 12 are arranged at intervals around the axis 29 of the through hole 5 and protrude toward an inside of the through hole 5. The second position-limiting portion 7 is located between the first position-limiting portion 6 and the third position-limiting portion 12. The first position-limiting portion 6 and the third position-limiting portion 12 are closer to the axis 29 of the through hole 5 than the second position-limiting portion 7. The position-limiting member 4 is suitable to be installed into the mounting hole 23 of the shell 3 from the outside of the shell 3 and is in anti-rotation connection with the shell 3. That is, an outer wall of the position-limiting member 4 is provided with bumps 26 matched with the embedding grooves 25, so that when the position-limiting member 4 is installed in the mounting hole 23, the bumps 26 are correspondingly embedded into the embedding grooves 25 so as to realize the anti-rotation connection, and the support portion 24 can support an outer edge of the position-limiting member 4 to prevent the position-limiting member 4 from continuing moving toward the inside of the shell 3. In other embodiments, the embedding grooves 25 may be provided in the outer wall of the position-limiting member 4, and the bumps 26 may be arranged on the wall of the mounting hole 23. Those skilled in the art may also adjust the number of the bumps 26 and the embedding grooves 25 according to needs. The position-limiting member 4 is further provided with a stopping portion 21 and a guiding protrusion 22. The stopping portion 21 is also located on the wall of the through hole 5 and protrudes toward the inside of the through hole 5, and is closer to the inside of the shell 3 than the first position-limiting portion 6, the second position-limiting portion 7 and the third position-limiting portion 12. The stopping portion is a stopping piece. The guiding protrusion 22 protrudes toward the outside of the shell 3 along the axis direction of the through hole 5. The guiding protrusion is annular and convex.

The operation member 9 is suitable to be fixedly connected to the valve stem 8 of the valve core 1 and at least partially located outside the shell 3, and suitable to be operated to rotate around the axis of the valve stem 8 so as to control the valve core 1. The operation member 9 is further provided with an abutting portion 10 extending in a direction parallel with the axis 29 of the through hole 5. The abutting portion 10 deviates from the axis 29 of the through hole 5 and extends into the through hole 5, and when the operation member 9 rotates, the first position-limiting portion 6, the second position-limiting portion 7 and the third position-limiting portion 12 are suitable to abut against the abutting portion 10 to restrict a rotation stroke of the operation member 9. Specifically, the second position-limiting portion 7 and the third position-limiting portion 12 restrict the operation member 9 in the same direction, and the first position-limiting portion 6 restricts the operation member 9 in a direction opposite to that of the second position-limiting portion 7 and the third position-limiting portion 12. The operation member 9 is further provided with a pressing portion 11. When the operation member 9 is rotated such that the abutting portion 10 rotates from the first position-limiting portion 6 to abut against the second position-limiting portion 7, the pressing portion 11 could to be pressed so as to reduce a distance between the abutting portion 10 and the axis 29 of the through hole 5, so that the abutting portion 10 could go over the second position-limiting portion 7 and continue rotating until abutting against the third position-limiting portion 12. In this embodiment, the operation member 9 includes a rotating member 13, a pressing member 14, an abutting member 15 and an elastic member 16. The rotating member 13 is suitable to be fixedly connected to the valve stem 8 of the valve core 1 and at least partially located outside the shell 3, and suitable to be operated to rotate around the axis of the valve stem 8 so as to control the valve core 1. The rotating member 13 is further provided with a first extending portion 17 and a second extending portion 18 extending along an axis direction of the through hole 5 and facing the shell 3, and the first extending portion 17 is farther away from the axis 29 of the through hole 5 than the second extending portion 18, and an accommodating space 19 is formed between the first extending portion 17 and the second extending portion 18. In this embodiment, the first extending portion 17 is located on an outer edge of the rotating member 13, and the second extending portion 18 is located in the middle of the rotating member 13 and configured to be fixedly connected with the valve stem 8. When the rotating member 13 is fixedly connected to the valve stem 8, the first extending portion 17 is suitable to abut against the position-limiting member 4 along the axis direction of the through hole 5 to prevent the position-limiting member 4 from leaving the shell 3, and the first extending portion 17 is further sleeved on the guiding protrusion 22, so that the guiding protrusion 22 can abut against and hold the first extending portion 17 to prevent the operation member 9 from deviation in a radial direction of the through hole 5. The first extending portion 17 is further provided with a via hole 20 located outside the shell 3. The pressing member 14 is installed in the via hole 20 and comprises the pressing portion 11. The elastic member 16 is located in the accommodating space 19 with one end abutting against the pressing member 14 and the other end abutting against the second extending portion 18. The abutting member 15 is at least partially located in the accommodating space 19 and runs through the pressing member 14 along the axis direction of the through hole 5. A part, extending into the through hole 5, of the abutting member 15 forms the abutting portion 10. The stopping portion 21 is suitable to abut against the abutting member 15 along the axis direction of the through hole 5 so as to prevent the abutting member 15 from moving toward the inside of the shell 3. The abutting member 15 is suitable to abut against the first extending portion 17 under the action of elastic force of the elastic member 16 so as to prevent the pressing member 14 from leaving the via hole 20.

The following exemplarily illustrates a working process of one water outlet device according to the embodiment:
As shown in FIG. 2, FIG. 3 and FIG. 5, when the valve core 1 is installed into the shell 3, the position-limiting member 4 is installed into the mounting hole 23 and the operation member 9 is fixedly connected to the valve stem 8, the operation member 9 can be rotated so as to control the valve core 1. When the abutting portion 10 is located between the first position-limiting portion 6 and the second position-limiting portion 7, the operation member 9 can be rotated freely. When the pressing portion 11 is being pressed downwards, the pressing member 14 drives the abutting member 15 to approach the axis 29 of the through hole 5 and the elastic member 16 thus is compressed, so that the abutting portion 10 can go over the second position-limiting portion 7, and thereby, the operation member 9 can continue rotating until the abutting portion 10 abuts against the third position-limiting portion 12. When the abutting portion 10 returns to the position between the first position-limiting portion 6 and the second position-limiting portion 7, the pressing member 14 returns to its original state under the action of the elastic force of the elastic member 16 and also drives the abutting member 15 to return to its original state.

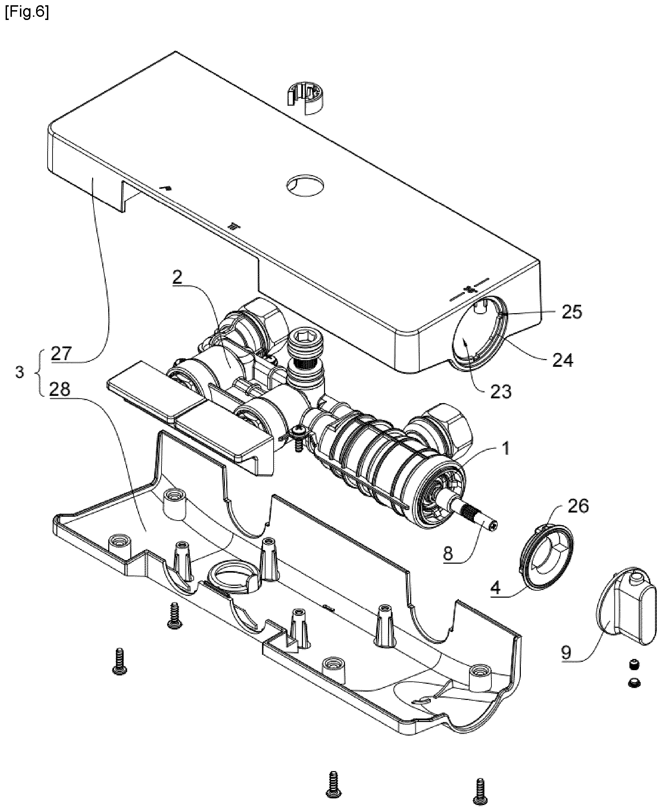

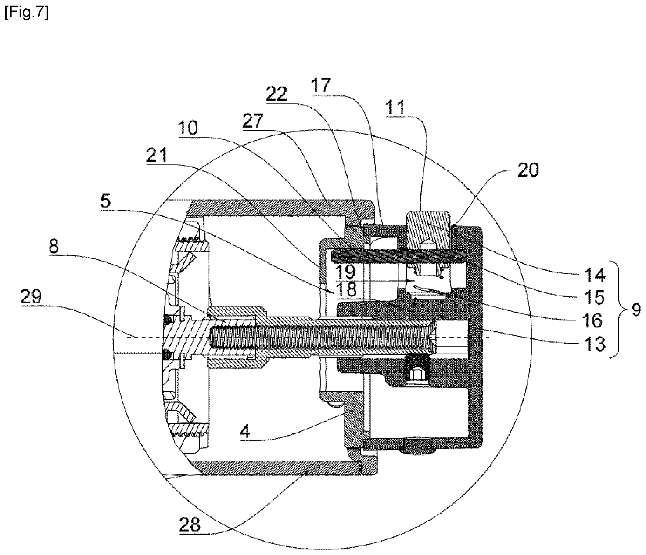

During the above process, since the abutting portion 10 always extends into the through hole 5, the abutting portion 10 can always abut against one of the first position-limiting portion 6, the second position-limiting portion 7 and the third position-limiting portion 12. As shown in FIG. 6 to FIG. 7, even if the valve core 1 is replaced with another type and the valve core 1 is far away from the operation member 9, the valve housing is still applicable, so that the valve core 1 can be controlled immediately right after the operation member 9 is fixedly connected to the valve stem 8 of the valve core 1, and one of the first position-limiting portion 6, the second position-limiting portion 7 and the third position-limiting portion 12 can always abut against the abutting portion 10 so as to restrict the rotation stroke of the operation member 9.

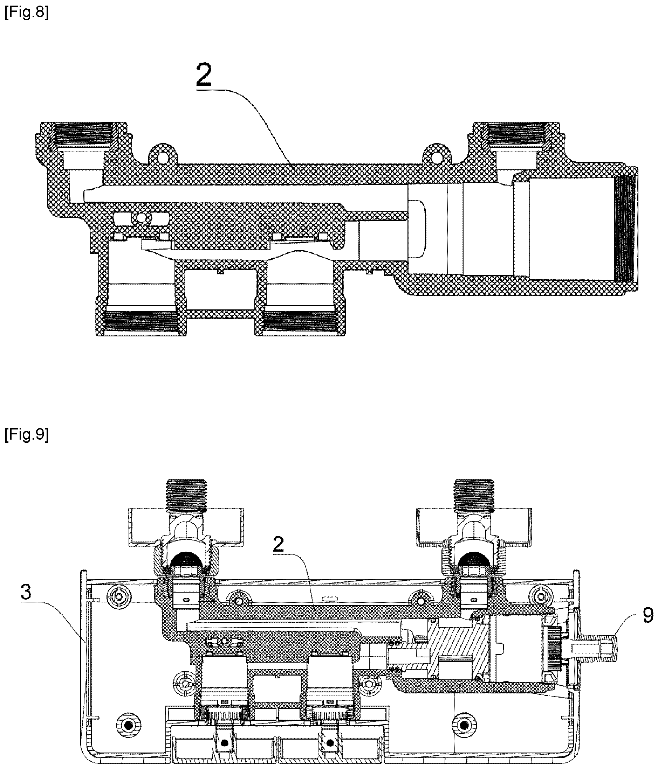

In addition, as shown in FIG. 8, the seat 2 is integrally molded, and a water channel structure is formed inside. The configuration of the water channel structure may be shaped according to needs and will not be defined here. The seat 2 is molded by core pulling from the right side, so that there is no need to make a hole for the water channel on the left side, which reduces the assembly parts and assembly time, lowers the material cost and shortens the injection molding cycle. Moreover, as shown in FIG. 9, the seat 2 formed with the water channel is isolated from the shell 3, so that when the user uses the water outlet device, it would be hard to transfer heat to the shell 3, which prevents the shell 3 from scalding the user.

It should be noted that as to what kind of valve core should be adopted and how the water path should be arranged, those skilled in the art can made the decision according to actual needs, and would not be the innovative point of the disclosure.

The shell 3 is suitable to accommodate the valve core 1 and keep the axis of the valve stem 8 of the valve core 1 parallel with the axis 29 of the through hole 5. The position-limiting member 4 is provided with the through hole 5 and is suitable to be fixedly connected to the shell 3 and the through hole 5 is allowed to communicate the inside of the shell 3 with the outside of the shell 3. Therefore, the operation member 9 can be fixedly connected to the valve stem 8 of the valve core 1 located inside the shell 3 and at least partially located outside the shell 3, and the valve core 1 thus can be controlled simply by operating the operation member 9. The position-limiting member 4 is provided with the first position-limiting portion 6 and the second position-limiting portion 7 located on the wall of the through hole 5. The first position-limiting portion 6 and the second position-limiting portion 7 are arranged at intervals around the axis 29 of the through hole 5 and protrude toward the inside of the through hole 5. The operation member 9 is provided with the abutting portion 10 extending in the direction parallel with the axis 29 of the through hole 5. The abutting portion 10 deviates from the axis 29 of the through hole 5 and could extend into the through hole 5. Therefore, when the operation member 9 rotates, one of the first position-limiting portion 6 and the second position-limiting portion 7 can abut against the abutting portion 10 to restrict the rotation stroke of the operation member 9. Compared with the prior art, since the position of the position-limiting member 4 in this technical solution is fixed, even if the shell 3 is provided with different types of valve cores 1 inside, the positions of the first position-limiting portion 6 and the second position-limiting portion 7 would not change, and the abutting portion 10 of the operation member 9 can always abut against one of the first position-limiting portion 6 and the second position-limiting portion 7, so that the valve housing is compatible with different types of valve cores 1 and has good universality.

The operation member 9 is provided with the pressing portion 11, and the position-limiting member 4 is further provided with the third position-limiting portion 12. The third position-limiting portion 12 is also located on the wall of the through hole 5 and protrudes toward the inside of the through hole 5, and the second position-limiting portion 7 is located between the first position-limiting portion 6 and the third position-limiting portion 12. The pressing portion 11 could be pressed to reduce the distance between the abutting portion 10 and the axis 29 of the through hole 5, such that during the rotation of the operation member 9, the abutting portion 10 can go over the second position-limiting portion 7 to continue rotating until abutting against the third position-limiting portion 12. Therefore, when the operation member 9 rotates such that the abutting portion 10 abuts against the second position-limiting portion 7, it is required to press the pressing portion 11 before the operation member 9 can continue rotating, which functions to remind the user.

The operation member 9 includes the rotating member 13, the pressing member 14, the abutting member 15 and the elastic member 16. The rotating member 13 is provided with the first extending portion 17 and the second extending portion 18 extending along the axis direction of the through hole 5. The first extending portion 17 is farther away from the axis 29 of the through hole 5 than the second extending portion 18, and the accommodating space 19 is formed between the first extending portion 17 and the second extending portion 18. The first extending portion 17 is further provided with the via hole 20 located outside the shell 3. The pressing member 14 is installed in the via hole 20 and comprises the pressing portion 11. The elastic member 16 is located in the accommodating space 19 with one end abutting against the pressing member 14 and the other end abutting against the second extending portion 18. The abutting member 15 forms the abutting portion 10, is at least partially located in the accommodating space 19 and runs through the pressing member 14 along the axis direction of the through hole 5, and is suitable to abut against the first extending portion 17 under the action of elastic force of the elastic member 16 so as to prevent the pressing member 14 from leaving the via hole 20. Therefore, when the pressing portion 11 is pressed, the elastic member 16 can be compressed, and the abutting portion 10 can be driven, so that the distance between the abutting portion 10 and the axis 29 of the through hole 5 can be reduced.

The position-limiting member 4 is further provided with the stopping portion 21, which is located on the wall of the through hole 5 and protrudes toward the inside of the through hole 5 and is suitable to abut against the abutting member 15 along the axis direction of the through hole 5 so as to prevent the abutting member 15 from moving toward the inside of the shell 3, which prevents the abutting member 15 from being disconnected from the pressing member 14 and falling into the shell 3.

The position-limiting member 4 is further provided with the guiding protrusion 22 protruding toward the outside of the shell 3 along the axis direction of the through hole 5, and when the rotating member 13 is fixedly connected to the valve stem 8 of the valve core 1, the first extending portion 17 is sleeved on the guiding protrusion 22, and the guiding protrusion 22 is suitable to abut against the first extending portion 17 to prevent the operation member 9 from deviation in the radial direction of the through hole 5, which is beneficial to the stable rotation of the rotating member 13.

The first extending portion 17 is further suitable to abut against the position-limiting member 4 so as to prevent the position-limiting member 4 from leaving the shell 3.

The shell 3 is provided with the mounting hole 23. The position-limiting member 4 is matched with the mounting hole 23 in shape, is suitable to be installed into the mounting hole 23 from the outside of the shell 3 and is in anti-rotation connection with the shell 3. In this way, when the position-limiting member 4 is fixedly connected to the shell 3, the through hole 5 can communicate the inside of the shell 3 with the outside of the shell 3. Installing the position-limiting member from the outside of the shell 3 is convenient for mounting and replacement. The wall of the mounting hole 23 is further provided with the support portion 24 protruding to the inside of the mounting hole 23. The support portion 24 is suitable to support the position-limiting member 4 so as to prevent the position-limiting member 4 from moving toward the inside of the shell 3.

Either the bumps 26 or the embedding grooves 25 extending along the radial direction of the mounting hole 23 are provided on the wall of the mounting hole 23, while the other is correspondingly provided on the position-limiting member 4. When the position-limiting member 4 is installed in the mounting hole 23, the bumps 26 are correspondingly embedded into the embedding grooves 25, which prevents the position-limiting member 4 from rotating relative to the shell 3.

When the valve core 1 is installed inside the shell 3, the axis of the valve stem 8 and the axis 29 of the through hole 5 are located in the same straight line, so that when the operation member 9 is fixedly connected to the valve stem 8, the abutting portion 10 on the operation member 9 can abut against the first position-limiting portion 6 and the second position-limiting portion 7.

The descriptions of the above specifications and examples are used to explain the scope of protection of the present disclosure, but are not intended to limit the scope of protection of the present disclosure. Through the enlightenment of the present disclosure or the above-mentioned embodiments, those of ordinary skill in the art can obtain the modification, equivalent replacement or other improvements of the embodiments or some of the technical features of the disclosure through logical analysis, reasoning or limited experiments in combination with common knowledge, ordinary technical knowledge in the field and/or related art, and the modification, equivalent replacement or other improvements of the present disclosure shall all be included in the protection scope of the present disclosure.

## Claims

1. A valve housing, **characterized by** comprising:
- a shell (3) for accommodating a valve core (1);
- a position-limiting member (4), provided with a through hole (5), and suitable to be fixedly connected to the shell (3) and allow the through hole (5) to communicate an inside of the shell (3) with an outside of the shell (3), the position-limiting member (4) being provided with a first position-limiting portion (6) and a second position-limiting portion (7) located on a wall of the through hole (5), the first position-limiting portion (6) and the second position-limiting portion (7) being arranged at intervals around an axis (29) of the through hole (5) and protruding toward an inside of the through hole (5), and when the valve core (1) is installed inside the shell (3), an axis of a valve stem (8) being parallel with the axis (29) of the through hole (5); and
- an operation member (9), suitable to be fixedly connected to the valve stem (8) of the valve core (1) and at least partially located outside the shell (3), and suitable to be operated to rotate around the axis of the valve stem (8) so as to control the valve core (1), the operation member (9) being provided with an abutting portion (10) extending in a direction parallel with the axis (29) of the through hole(5), the abutting portion (10) deviating from the axis (29) of the through hole (5) and could extend into the through hole (5), and when the operation member (9) rotates, one of the first position-limiting portion (6) and the second position-limiting portion (7) could abut against the abutting portion (10) to restrict a rotation stroke of the operation member (9).

2. The valve housing according to claim 1, **characterized in that** the operation member (9) is provided with a pressing portion (11), and the position-limiting member (4) is provided with a third position-limiting portion (12), the third position-limiting portion (12) being located on the wall of the through hole (5) and protruding toward the inside of the through hole (5), and the second position-limiting portion (7) being located between the first position-limiting portion (6) and the third position-limiting portion (12); and the pressing portion (11) could be pressed to reduce a distance between the abutting portion (10) and the axis (29) of the through hole (5), such that during the rotation of the operation member (9), the abutting portion (10) could go over the second position-limiting portion (7) to continue rotating until abutting against the third position-limiting portion (12).

3. The valve housing according to claim 2, **characterized in that** the operation member (9) comprises a rotating member (13), a pressing member (14), an abutting member (15) and an elastic member (16), the rotating member (13) being suitable to be fixedly connected to the valve stem (8) of the valve core (1) and at least partially located outside the shell (3), and suitable to be operated to rotate around the axis of the valve stem (8) so as to control the valve core (1);the rotating member (13) is provided with a first extending portion (17) and a second extending portion (18) extending along an axis direction of the through hole (5), the first extending portion (17) being farther away from the axis (29) of the through hole (5) than the second extending portion (18), and an accommodating space (19) being formed between the first extending portion (17) and the second extending portion (18);and the first extending portion (17) is provided with a via hole (20) located outside the shell (3), the pressing member (14) being installed in the via hole (20) and forming the pressing portion (11), the elastic member (16) being located in the accommodating space (19) with one end abutting against the pressing member (14) and another end abutting against the second extending portion (18), and the abutting member (15) forming the abutting portion (10), being at least partially located in the accommodating space (19) and running through the pressing member (14) along the axis direction of the through hole (5), and being suitable to abut against the first extending portion (17) under the action of elastic force of the elastic member (16) so as to prevent the pressing member (14) from leaving the via hole (20).

4. The valve housing according to claim 3, **characterized in that** the position-limiting member (4) is provided with a stopping portion (21), which is located on the wall of the through hole (5) and protrudes toward the inside of the through hole (5) and is suitable to abut against the abutting member (15) along the axis direction of the through hole (5) so as to prevent the abutting member (15) from moving toward the inside of the shell (3).

5. The valve housing according to claim 3, **characterized in that** the position-limiting member (4) is provided with a guiding protrusion (22) protruding toward the outside of the shell (3) along the axis direction of the through hole (5), and when the rotating member (13) is fixedly connected to the valve stem (8) of the valve core (1), the first extending portion (17) is sleeved on the guiding protrusion (22), and the guiding protrusion (22) is suitable to abut against the first extending portion (17) to prevent the operation member (9) from deviation in a radial direction of the through hole (5).

6. The valve housing according to claim 3, **characterized in that** the first extending portion (17) is suitable to abut against the position-limiting member (4) to prevent the position-limiting member (4) from leaving the shell (3).

7. The valve housing according to claim 1, **characterized in that** the shell (3) is provided with a mounting hole (23), and the position-limiting member (4) is matched with the mounting hole (23) in shape and is suitable to be installed into the mounting hole (23) from the outside of the shell (3) and is in anti-rotation connection with the shell (3); a wall of the mounting hole (23) is provided with a support portion (24) protruding to the inside of the mounting hole(23); and the support portion (24) is suitable to support the position-limiting member (4) to prevent the position-limiting member (4) from moving toward the inside of the shell (3).

8. The valve housing according to claim 7, **characterized in that** either a bump (26) or an embedding groove (25) extending along a radial direction is provided on the wall of the mounting hole (23), while the other is correspondingly provided on the position-limiting member (4); and when the position-limiting member (4) is installed in the mounting hole (23), the bump (26) is correspondingly embedded into the embedding groove (25).

9. The valve housing according to claim 1, **characterized in that** when the valve core (1) is installed inside the shell (3), the axis of the valve stem (8) and the axis (29) of the through hole (5) are located in a same straight line.

10. A water outlet device, **characterized by** comprising a seat (2), the valve core (1) and the valve housing according to any one of claims 1 to 9, the valve core (1) being fixedly connected to the seat (2), the seat (2) being fixedly connected to a shell (3) and located inside the shell (3), an axis of the valve stem (8) of the valve core (1) is parallel with the axis (29) of the through hole (5), and the operation member (9) is fixedly connected to the valve stem (8) of the valve core (1).
